# EUROPÄISCHE PATENTANMELDUNG

(11) **EP 1 574 889 A1**
(43) Veröffentlichungstag der Anmeldung: **14.09.2005**
(21) Anmeldenummer: 05003525.2
(22) Anmeldetag: 18.02.2005
(51) Int. Cl.: G02B 13/10, G02B 27/01

(54) **Anzeigevorrichtung mit anamorphotischen Prismen**

(30) Priorität: 11.03.2004 DE 102004012032
(71) Anmelder: CARL ZEISS JENA GmbH, 07745 JENA (DE)
(72) Erfinder: Dobschal, Hans-Jürgen, 99510 Kleinromstedt (DE); Tröllsch, Arne, Dr., 99441 Grossschwabhausen (DE); Jahn, Dirk, 07743 Jena (DE)
(74) Vertreter: Grimm, Christian

(57) **Zusammenfassung**

Es wird eine Anzeigevorrichtung mit einem Bildmodul (1), das ein Bild erzeugt, einer gekrümmten Reflexionsfläche (7) und einer zwischen dem Bildmodul (1) und der Reflexionsfläche (7) angeordneten Abbildungsoptik (4), die das erzeugte Bild über die Reflexionsfläche (7) als virtuelles Bild (10) abbildet, bereitgestellt, wobei ein Abbildungsstrahlengang vom Bildmodul (1) über die Abbildungsoptik (4) bis zur Reflexionsfläche (7) verläuft, und wobei im Abbildungsstrahlengang zwischen dem Bildmodul (1) und der Reflexionsfläche (7) ein erstes Prisma (2) angeordnet ist, das in einer ersten Halterung befestigt ist, wobei zur Kompensation eines durch die Reflexionsfläche bedingten Fehlers im virtuellen Bild die Lage des Prismas (2) im Abbildungsstrahlengang mittels der Halterung veränderbar ist.

## Beschreibung

Die Erfindung betrifft eine Anzeigevorrichtung mit einem Bildmodul, das ein Bild erzeugt, einer gekrümmten Reflexionsfläche und einer zwischen dem Bildmodul und der Reflexionsfläche angeordneten Abbildungsoptik, die das erzeugte Bild über die Reflexionsfläche als virtuelles Bild abbildet, wobei ein Abbildungsstrahlengang vom Bildmodul über die Abbildungsoptik bis zur Reflexionsfläche verläuft.

Eine solche Anzeigevorrichtung wird häufig in ein Fahrzeug eingebaut, wobei die Reflexionsfläche dann in der Regel die Windschutzscheibe des Fahrzeugs ist. In diesem Fall wird eine solche Anzeigevorrichtung auch häufig Head-Up-Display (HUD) genannt. Bei solchen Anzeigevorrichtungen besteht die Schwierigkeit, daß die Fertigungstoleranzen der Windschutzscheibe und die Einbautoleranzen in der Regel so groß sind, daß dies zu deutlich wahrnehmbaren Verzerrungen und Verzeichnungen im virtuellen Bild führt. Das bedeutet, daß selbst wenn die Abbildungsoptik für eine gekrümmte Reflexionsfläche mit einer vorbestimmten Form optimiert ist, in der Praxis immer noch deutlich wahrnehmbare Abbildungsfehler auftreten.

Ausgehend hiervon ist es Aufgabe der Erfindung, eine Anzeigevorrichtung der eingangs genannten Art so weiterzubilden, daß ein durch Abweichungen der Reflexionsfläche von einer vorbestimmten Form bedingter Abbildungsfehler im virtuellen Bild kompensiert werden kann.

Erfindungsgemäß wird die Aufgabe bei einer Anzeigevorrichtung der eingangs genannten Art dadurch gelöst, daß im Abbildungsstrahlengang zwischen dem Bildmodul und der Reflexionsfläche ein erstes Prisma angeordnet ist, das in einer ersten Halterung befestigt ist, wobei zur Kompensation eines durch die Reflexionsfläche bedingten Abbildungsfehler im virtuellen Bild die Lage des Prismas im Abbildungsstrahlengang mittels der Halterung veränderbar ist. Durch dieses lageveränderbare Prisma kann in einfachster Art der unerwünschte Abbildungsfehler kompensiert werden, ohne daß die Abbildungsoptik selbst verändert werden muß. Somit kann die erfindungsgemäße Anzeigevorrichtung leicht an die konkrete Reflexionsfläche angepaßt werden. Dies ist besonders von Vorteil, wenn die Anzeigevorrichtung als HUD-Anzeigevorrichtung eingesetzt wird, da gerade in diesem Bereich große Schwierigkeiten bestehen, eine ausreichende Abbildungsqualität sicherzustellen. Ferner ist es auch möglich, bei einer Auswechslung der Reflexionsfläche bzw. der Windschutzscheibe die Anzeigevorrichtung an die neue Reflexionsfläche bzw. Windschutzscheibe wieder optimal anzupassen. Somit kann die Lage des Prismas relativ zur Abbildungsoptik so gewählt werden, daß bei einer Abweichung der Form bzw. Krümmung der Reflexionsfläche von einer vorbestimmten Sollform bzw. Sollkrümmung der dadurch unerwünschte Fehler im virtuellen Bild (teilweise oder vollständig) kompensiert wird.

Insbesondere kann bei der erfindungsgemäßen Anzeigevorrichtung die Halterung so ausgebildet sein, daß das erste Prisma um die optische Achse der Abbildungsoptik gedreht, entlang oder quer zur optischen Achse bewegt und/oder gegenüber der optischen Achse gekippt werden kann. Mit dieser Ausbildung der Halterung ist eine freie Einstellung der Lage des ersten Prismas möglich, so daß die Anzeigevorrichtung äußerst gut an die individuelle Reflexionsfläche angepaßt werden kann.

Die erste Halterung kann zumindest Stellglied zur Lageverstellung des ersten Prismas aufweisen. Dieses Stellglied läßt sich in der Regel elektronisch ansteuern und kann motorgetrieben sein, so daß selbst im eingebauten Zustand der Anzeigevorrichtung (d.h., wenn sie äußerst schwer zugänglich ist) immer noch eine Anpassung an die Reflexionsfläche und somit eine Kompensation des Abbildungsfehlers erfolgen kann.

Es ist besonders bevorzugt, daß die Anzeigevorrichtung ein zweites Prisma zwischen dem Bildmodul und dem ersten Prisma aufweist. Damit können die durch die Prismen eingeführten Abbildungsfehler minimiert werden.

Die Prismen können so angeordnet sein, daß sie in einer Grundstellung im wesentlichen wie eine planparallele Platte wirken. Dies ist insbesondere von Vorteil, wenn die Prismen nachträglich in eine schon realisierte HUD-Anzeigevorrichtung eingebaut werden.

Insbesondere können die beiden Prismen den gleichen Prismenwinkel aufweisen. Damit können die Herstellungskosten verringert werden, da nur ein Prismentyp hergestellt werden muß.

Das zweite Prisma ist bevorzugt in einer zweiten Halterung befestigt, wobei die Lage des zweiten Prismas mittels der zweiten Halterung veränderbar ist. Damit werden weitere Freiheitsgrade bereitgestellt, um die gewünschte Fehlerkompensation durchzuführen. Die zweite Halterung kann wiederum so ausgebildet sein, daß das zweite Prisma um die optische Achse der Abbildungsoptik gedreht, entlang oder quer zur optischen Achse bewegt und/oder gegenüber der optischen Achse gekippt werden kann.

Natürlich kann die zweite Halterung auch so ausgebildet sein, daß die Lage des zweiten Prismas im Abbildungsstrahlengang fixiert und nicht veränderbar ist. In diesem Fall wird lediglich das erste Prisma relativ zum zweiten Prisma bewegt.

Die optischen Flächen des bzw. der Prismen sind insbesondere als Planflächen ausgebildet. Damit wird sichergestellt, daß ein unerwünschter nachteiliger Einfluß der beiden Prismen auf die Abbildungsqualität möglichst gering ist. Natürlich ist es auch möglich, die optischen Flächen als gekrümmte Flächen bzw. Freiformflächen auszubilden. In diesem Fall weisen die Prismen dann noch Abbildungseigenschaften auf.

Das bzw. die Prismen sind bevorzugt im Abbildungsstrahlengang zwischen dem Bildmodul und der Abbildungsoptik angeordnet. Dies führt zu dem Vorteil, daß in diesem Bereich der Strahlenquerschnitt des vom Bildmoduls kommenden Lichts in der Regel kleiner ist als im Abbildungsstrahlengang hinter der Abbildungsoptik, so daß das bzw. die Prismen relativ klein ausgebildet werden können.

Die beiden Prismen sind insbesondere als Transmissionsprismen ausgebildet, so daß das Licht von dem Bildmodul durch beide Prismen transmittiert wird.

Ferner können die Prismen als achromatisierte Prismen ausgebildet sein. Damit wird ein nachteiliger Einfluß der Prismen weiter minimiert.

Natürlich kann die Anzeigevorrichtung mehr als zwei Prismen aufweisen, wobei es bevorzugt ist, die Prismen immer paarweise vorzusehen. Die Prismenpaare weisen dann in der Regel jeweils eine Grundstellung auf, in der sie im wesentlichen als planparallele Platte wirken.

Wenn die Anzeigevorrichtung z. B. drei Prismen aufweist, können die Prismen so ausgebildet sein, daß in einer Grundstellung die drei Prismen als planparallele Platte wirken.

Insbesondere ist die Anzeigevorrichtung in einem Fahrzeug eingebaut, wobei die Reflexionsfläche eine Fahrzeugscheibe, bevorzugt die Windschutzscheibe, ist. In diesem Fall wird das virtuelle Bild so dargestellt, daß es der Benutzer bzw. Fahrzeuginsasse in Überlagerung mit der von ihm durch die Scheibe wahrnehmbaren Umgebung sieht.

Die Anzeigevorrichtung kann ferner eine Steuereinheit aufweisen, die das Bildmodul ansteuert, um das gewünschte Bild zu erzeugen. Ferner kann die Steuereinheit gegebenenfalls auch noch die erste und/oder zweite Halterung ansteuern.

Der Prismenwinkel des bzw. der Prismen ist bevorzugt kleiner als 30°. Insbesondere liegt der Prismenwinkel in einem Bereich von 10° - 20°.

Die Verdrehbarkeit des bzw. der Prismen gegenüber der optischen Achse ist bevorzugt so gewählt, daß Drehwinkel von 0° bis 45°, bevorzugt von 0° bis 30° möglich sind.

Das Bildmodul kann einen reflektiven oder transmissiven Lichtmodulator (z. B. ein LCD-Modul, ein LCoS-Modul, eine Kippspiegelmatrix) und eine Lichtquelle oder ein selbstleuchtendes Display (z. B. OLED = organische Leuchtdioden) aufweisen.

Ferner wird ein Anzeigeverfahren bereitgestellt, bei dem ein Bild erzeugt wird und das erzeugte Bild entlang eines Abbildungsstrahlengangs, in dem eine gekrümmte Reflexionsfläche angeordnet ist, als virtuelles Bild abgebildet wird, wobei zur Kompensation eines durch die Reflexionsfläche bedingten Abbildungsfehlers im virtuellen Bild die Lage eines im Abbildungsstrahlenganges angeordneten Prismas verändert wird.

Mit diesem Verfahren kann der durch die Reflexionsfläche bedingte Abbildungsfehler (aufgrund einer Abweichung der Reflexionsfläche von ihrer Sollform) leicht und schnell korrigiert werden.

Das Verfahren kann so weitergebildet werden, daß im Abbildungsstrahlengang zwei Prismen angeordnet sind, wobei entweder nur eines der beiden Prismen in seiner Lage veränderbar ist oder aber beide Prismen lageveränderbar angeordnet sind.

Die Erfindung wird nachfolgend beispielhalber anhand der Zeichnungen noch näher erläutert.

Es zeigen:
- Fig.1: eine schematische Ansicht einer ersten Ausführungsform der erfindungsgemäßen Anzeigevorrichtung;
- Fig. 2: eine vergrößerte Darstellung der beiden Prismen von Fig. 1;
- Fig. 3: eine schematische Ansicht der ersten Ausführungsform der Anzeigevorrichtung, bei der die Lage der Prismen verändert ist;
- Fig. 4: ein mittels der Anzeigevorrichtung erzeugtes virtuelles Bild mit einem durch die Scheibe bedingten Abbildungsfehler;
- Fig. 5: eine perspektivische Ansicht der Lage der beiden Prismen zur Kompensation des in Fig. 4 gezeigten Abbildungsfehlers;
- Fig. 6: einen weiteren durch die Scheibe bedingten Abbildungsfehler im virtuellen Bild, und
- Fig. 7: eine perspektivische Ansicht der Lage der Prismen zur Kompensation des in Fig. 6 gezeigten Fehlers.

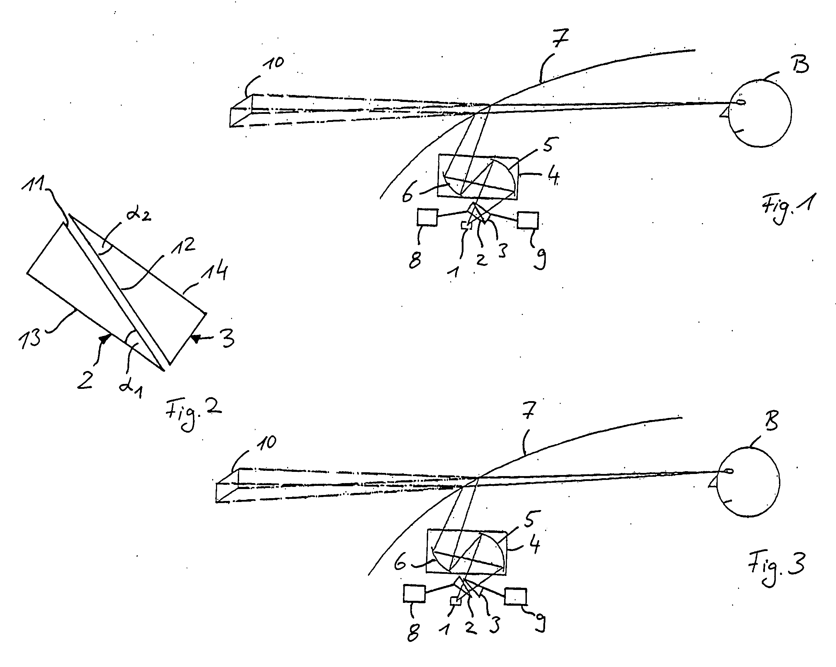

Bei der in den Figuren 1 und 3 gezeigten Ausführungsform umfaßt die erfindungsgemäße Anzeigevorrichtung ein Bildmodul 1, für das hier schematisch ein LCD-Modul eingezeichnet ist, ein erstes und ein zweites Prisma 2, 3, die dem Bildmodul 1 nachgeordnet sind, sowie eine schematisch dargestellte Abbildungsoptik 4 mit zwei Spiegeln 5, 6 und eine gekrümmte Reflexionsfläche 7, die hier eine Windschutzscheibe eines Fahrzeugs ist. Das LCD-Modul kann transmissiv oder reflektiv sein und mit Licht einer Lichtquelle (nicht gezeigt) beaufschlagt werden. Das Bildmodul 1 und somit auch das LCD-Modul wird mittels einer Ansteuereinheit (nicht gezeigt) so angesteuert, daß ein gewünschtes Bild erzeugt wird. Natürlich können statt des LCD-Moduls andere flächige Lichtmodulatoren, wie z. B. ein LCoS-Modul oder auch eine Kippspiegelmatrix, verwendet werden.

In der in Figur 1 gezeigten Ausführungsform sind die beiden Prismen 2, 3 in ihrer Grund- bzw. Ruhestellung, in der sie im wesentlichen als planparallele Platte wirken. Wie in der vergrößerten Darstellung der beiden Prismen in Figur 2 ersichtlich ist, ist der Prismenwinkel *α*₁ des ersten Prismas 20°. Der Prismenwinkel *α*₂ des zweiten Prismas 3 ist ebenfalls 20°. Die beiden Prismen sind so zueinander angeordnet, daß ihre Hypotenusenseiten 11, 12 voneinander beabstandet sind und zueinander parallel verlaufen. Dadurch sind auch ihre beiden Kathetenseiten 13, 14, durch die das Licht vom Bildmodul 1 läuft, zueinander parallel ausgerichtet, so daß die beiden Prismen 2, 3 in ihrer Grundstellung als planparallele Platte wirken und somit die Abbildung kaum nachteilig beeinflussen. Natürlich kann die Abbildungsoptik 4 so ausgelegt sein, daß der Einfluß der beiden Prismen 2 und 3 in ihrer Grundstellung kompensiert wird. Ferner enthält die Anzeigevorrichtung für das erste und zweite Prisma 2, 3 jeweils eine Halterung 8, 9, die jeweils so ausgebildet ist, daß damit die Lage des entsprechenden Prismas 2, 3 veränderbar ist.

Im Betrieb wird mittels des Bildmoduls 1 ein darzustellendes Bild erzeugt, das dann mittels der Abbildungsoptik 4 und der Windschutzscheibe 7 so abgebildet wird, daß ein Betrachter B das Bild als virtuelles Bild 10 wahrnehmen kann. Für den Betrachter B wird damit in die ihm wahrnehmbare Umgebung das virtuelle Bild 10 in Überlagerung eingeblendet. Die Abbildungsoptik 4 ist dabei so ausgebildet, daß die durch die Reflexion an der gekrümmten Windschutzscheibe 7 bedingten Verzerrungen kompensiert werden.

Bei der in Figur 1 gezeigten Ausführungsform wird von einer Windschutzscheibe 7 ausgegangen, die eine vorbestimmte Krümmung aufweist. In der Praxis hat sich doch gezeigt, daß die Schwankungen der Form von einer Windschutzscheibe zur anderen und damit die Abweichungen von der vorbestimmten Form so groß sind, daß dies zu deutlich wahrnehmbaren Verzerrungen und Verzeichnungen des virtuellen Bildes 10 führt. Zur Kompensation dieser Verzerrungen und Verzeichnungen kann nun die Lage der beiden Prismen 2 und 3 unabhängig voneinander geändert werden. Insbesondere können die Prismen um die optische Achse der Abbildungsoptik 4 gedreht und gegenüber der optischen Achse bewegt und gekippt werden. Durch eine solche Änderung der Lage der Prismen 2 und 3 können die durch die Abweichungen der unterschiedlichen Windschutzscheiben von der vorbestimmten Form bedingten Verzerrungen und Verzeichnungen gut kompensiert werden. Die muß natürlich nur einmal beim Einbau der entsprechenden Windschutzscheibe 7 durchgeführt werden. Dazu kann beispielsweise mittels der Anzeigevorrichtung ein Testmuster als virtuelles Bild 10 dargestellt werden und anhand dieses Testmusters können dann die Prismenlagen eingestellt werden. Die Halterungen 8 und 9 sind bevorzugt so ausgebildet, daß sie jeweils ein Stellglied enthalten, mittels dem die Lage des Prismas 2 bzw. 3 eingestellt wird. Ein Beispiel zur Einstellung der Prismenlage ist beispielsweise in Figur 3 gezeigt. Bei diesem Beispiel ist das Prisma 2 quer zur optischen Achse verschoben und ist das Prisma 3 relativ zur optischen Achse gekippt im Vergleich zur in Figur 1 gezeigten Ruhestellung.

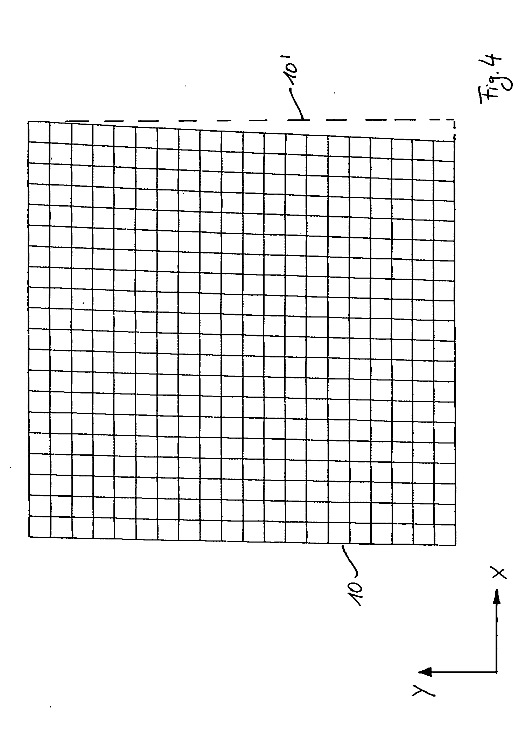

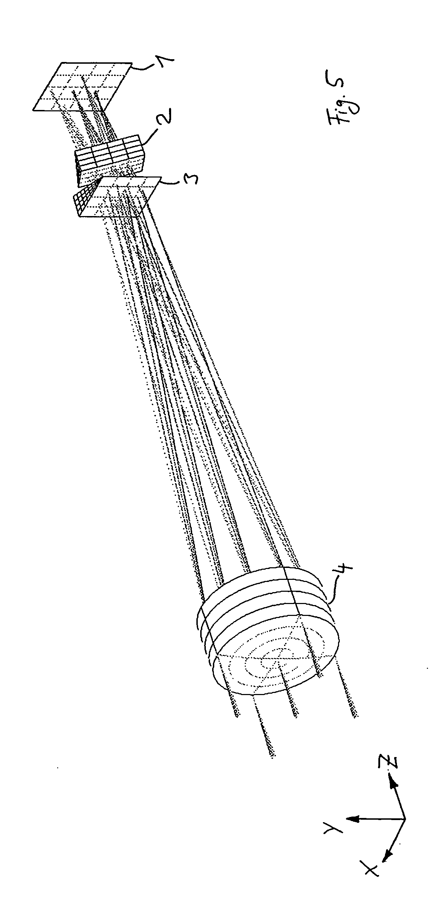

In Figur 4 ist als Beispiel für ein für den Beobachter B wahrnehmbares virtuelles Bild 10 ein Raster mit durchgezogenen Linien gezeigt, wie er es bei Ruhestellung der beiden Prismen 2 und 3 wahrnehmen würde. Wie aus Figur 4 ersichtlich ist, weist die rechte Seite des Rasters so von der gewünschten Quadratform ab, daß die Bildbreite von oben nach unten abnimmt. Um nun diesen Abbildungsfehler zu korrigieren, wird das erste Prisma etwas um die optische Achse gedreht, wie in der perspektivischen Ansicht von Figur 5 dargestellt ist. Bei einer solchen Lage der beiden Prismen 2 und 3 zueinander ist das für den Beobachter B wahrnehmbare virtuelle Bild wieder quadratisch, wie in Figur 4 durch die gestrichelte Linie angedeutet ist. Dieses Bild wird mit dem Bezugszeichen 10' bezeichnet.

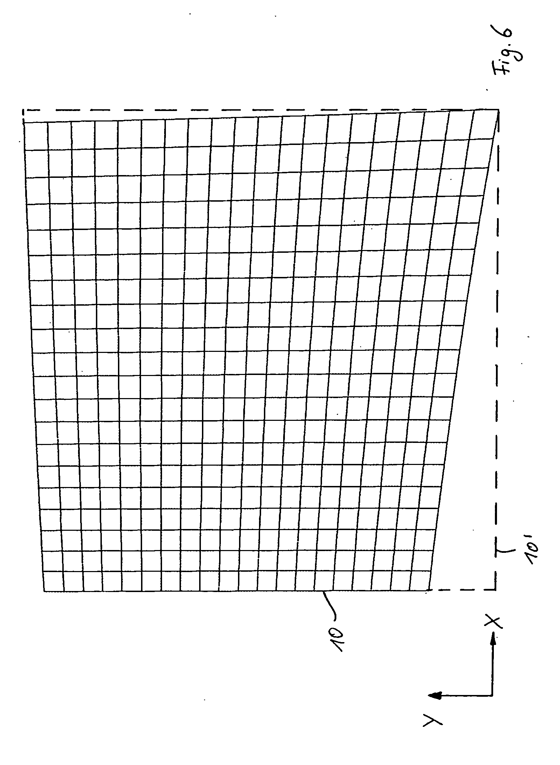

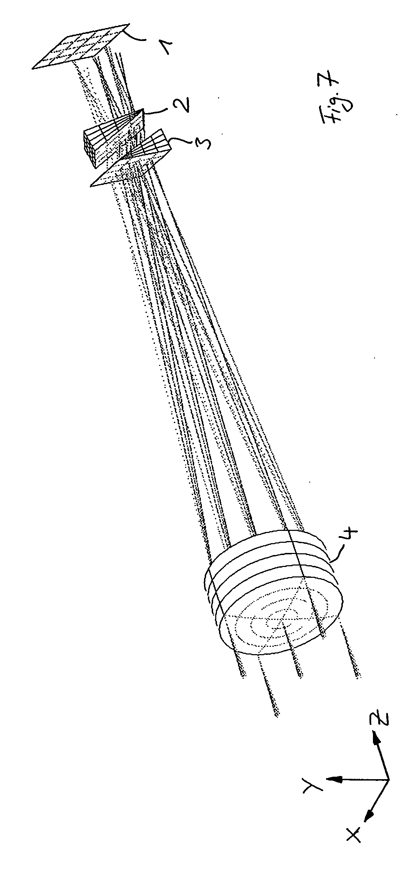

In Figur 6 ist eine andere Verzerrung des virtuellen Bildes 10 mittels eines Rasters dargestellt. In diesem Fall nimmt die Bildbreite von oben nach unten zu und nimmt die Bildhöhe von links nach rechts zu. Um diesen Abbildungsfehler zu kompensieren, ist das zweite Prisma 3 um 90° gegenüber der Ruhestellung um die optische Achse verdreht und ist das erste Prisma 2 um mehr als 90° gegenüber der Ruhestellung um die optische Achse verdreht. Zusätzlich sind noch beide Prismen gegenüber der optischen Achse verkippt, so daß die Flächennormale der entsprechenden Kathetenseite 13, 14 des ersten und zweiten Prismas 2, 3 jeweils aus der optischen Achse herausgekippt ist, d. h. die Flächennormale ist nicht mehr parallel zur optischen Achse, sondern schließt mit dieser einen Winkel von ungleich 0° ein. Die Lage der beiden Prismen ist der perspektivischen Ansicht von Figur 7 schematisch dargestellt. In der Figur 6 ist das für den Beobachter B wahrnehmbare virtuelle Bild 10' gestrichelt angedeutet.

## Patentansprüche

1. Anzeigevorrichtung mit
einem Bildmodul (1), das ein Bild erzeugt,
einer gekrümmten Reflexionsfläche (7) und
einer zwischen dem Bildmodul (1) und der Reflexionsfläche (7) angeordneten Abbildungsoptik (4), die das erzeugte Bild über die Reflexionsfläche (7) als virtuelles Bild (10) abbildet, wobei ein Abbildungsstrahlengang vom Bildmodul (1) über die Abbildungsoptik (4) bis zur Reflexionsfläche (7) verläuft,
**dadurch gekennzeichnet, daß**
im Abbildungsstrahlengang zwischen dem Bildmodul (1) und der Reflexionsfläche (7) ein erstes Prisma (2) angeordnet ist, das in einer ersten Halterung befestigt ist, wobei zur Kompensation eines durch die Reflexionsfläche bedingten Fehlers im virtuellen Bild die Lage des Prismas (2) im Abbildungsstrahlengang mittels der Halterung veränderbar ist.

2. Anzeigevorrichtung nach Anspruch 1, **dadurch gekennzeichnet, daß** die Halterung so ausgebildet ist, daß das erste Prisma (2) um die optische Achse der Abbildungsoptik (4) gedreht, entlang oder quer zur optischen Achse bewegt und/oder gegenüber der optischen Achse gekippt werden kann.

3. Anzeigevorrichtung nach einem der obigen Ansprüche, **dadurch gekennzeichnet, daß** die ersten Halterung zumindest ein Stellglied zur Lageverstellung des ersten Prismas (2) aufweist.

4. Anzeigevorrichtung nach einem der obigen Ansprüche, **dadurch gekennzeichnet, daß** ein zweites Prisma (3) im Abbildungsstrahlengang zwischen dem Bildmodul (1) und der Reflexionsfläche (7) angeordnet ist.

5. Anzeigevorrichtung nach Anspruch 4, **dadurch gekennzeichnet, daß** in einer Grundstellung des ersten und zweiten Prismas (2, 3) die beiden Prismen (2, 3) im wesentlichen wie eine planparallele Platte wirken.

6. Anzeigevorrichtung nach Anspruch 4 oder 5, **dadurch gekennzeichnet, daß** die beiden Prismen (2, 3) den gleichen Prismenwinkel (*α*₁, *α*₂) aufweisen.

7. Anzeigevorrichtung nach einem der Ansprüche 4 bis 6, **dadurch gekennzeichnet, daß** das zweite Prisma (3) in einer zweiten Halterung befestigt ist, wobei die Lage des zweiten Prismas (3) mittels der zweiten Halterung veränderbar ist.

8. Anzeigevorrichtung nach einem der obigen Ansprüche, **dadurch gekennzeichnet, daß** das bzw. die Prismen (2, 3) im Abbildungsstrahlengang zwischen dem Bildmodul (1) und Abbildungsoptik (4) angeordnet sind.

9. Anzeigevorrichtung nach einem der obigen Ansprüche, **dadurch gekennzeichnet, daß** die optischen Flächen (11, 12, 13, 14) des bzw. der Prismen (2, 3) als Planflächen ausgebildet sind.

10. Anzeigevorrichtung nach einem der obige Ansprüche, **dadurch gekennzeichnet, daß** das bzw. die Prismen (2, 3) als Transmissionsprismen ausgebildet sind.

11. Anzeigevorrichtung nach einem der obigen Ansprüche, **dadurch gekennzeichnet, daß** die Anzeigevorrichtung in einem Fahrzeug eingebaut ist.

12. Anzeigevorrichtung nach Anspruch 11, **dadurch gekennzeichnet, daß** die Reflexionsfläche (7) eine Fahrzeugscheibe, bevorzugt die Windschutzscheibe, ist.

13. Anzeigeverfahren, bei dem ein Bild erzeugt wird und das erzeugte Bild entlang eines Abbildungsstrahlenganges, in dem eine gekrümmte Reflexionsfläche angeordnet ist, als virtuelles Bild abgebildet wird, wobei zur Kompensation eines durch die Reflexionsfläche bedingten Fehlers im virtuellen Bild die Lage eines im Abbildungsstrahlenganges angeordneten Prismas verändert wird.
